# EUROPÄISCHE PATENTSCHRIFT

(11) **EP 1 147 322 B1**
(45) Veröffentlichungstag und Bekanntmachung des Hinweises auf die Patenterteilung: **04.12.2002**
(21) Anmeldenummer: 99958133.3
(22) Anmeldetag: 29.11.1999
(51) Int. Cl.: F16B 4/00, F16L 55/11

(54) **VERSCHLUSSVORRICHTUNG FÜR DRUCKMITTEL FÜHRENDE KANÄLE**
DEVICE FOR CLOSING CHANNELS CONVEYING A PRESSURE MEDIUM
DISPOSITIF DE FERMETURE POUR CANAUX ACHEMINANT DES MILIEUX SOUS PRESSION

(30) Priorität: 20.01.1999 DE 19902038
(43) Veröffentlichungstag der Anmeldung: 24.10.2001
(73) Patentinhaber: Continental Teves AG & Co. oHG, 60488 Frankfurt (DE)
(72) Erfinder: JÜRGENS, Michael, D-61200 Wölfersheim (DE)
(86) Internationale Anmeldenummer: EP9909247
(87) Internationale Veröffentlichungsnummer: WO00043681

(56) Entgegenhaltungen:
- DE-A- 4 415 341
- US-A- 2 663 451
- US-A- 3 269 581
- US-A- 3 578 027
- US-A- 5 224 515
- US-A- 5 853 017

## Beschreibung

Die vorliegende Erfindung betrifft eine Verschlußvorrichtung zum Verschließen von Druckmittel führenden Kanälen in einem Gehäuse durch einen, in einem Kanal durch eine Clinchverbindung befestigten Schließkörper, wobei der Schließkörper an seinem Außenumfang eine erste Ausnehmung für die Clinchverbindung aufweist.

Aus der Druckschrift DE 44 15 341 A1 ist eine derartige Verschlußvorrichtung bereits bekannt. Bei der in dieser Druckschrift offenbarten Verschlußvorrichtung wird eine besonders sichere Befestigung und Abdichtung eines Schließkörpers in einem Gehäuse dadurch geschaffen, daß der Schließkörper mittels einer kombinierten Selbstverstemmund Spreizbefestigung in einer Stufenbohrung des Gehäuses angebracht ist. Eine derartige Verschlußvorrichtung erfordert eine Stufenbohrung, einen aufwendig geformten Schließkörper und ein Spezialwerkzeug zur plastischen Aufweitung bzw. Aufspreizung eines an dem Schließkörper ausgeformten Kragens.

Aus der Patentschrift US 5,853,017 ist ebenfalls eine gattungsgemäße Verschlußvorrichtung bekannt. Die Verschlußvorrichtung umfaßt einen Schließkörper, der an seinem Außenumfang eine erste Ausnehmung für die Clinchverbindung aufweist. Ferner ist am Schließkörper eine weitere Ausnehmung für eine zweite Clinchverbindung vorgesehen, so daß gegenüber der obigen einfachen Clinchverbindung eine bessere Befestigung und Abdichtung erzielt wird. Die beiden Ausnehmungen sind derart beabstandet angeordnet, daß der beim Clinchen bzw. Verstemmen an einer Ausnehmung entstehende Materialfluß die andere Clinchverbindung nicht beeinflußt.

Ferner ist, insbesondere bei Verschlußkappen oder deckelförmigen Schließkörpern, die eine relativ große, dem Betriebsdruck ausgesetzte Stirnfläche aufweisen und unter Hochdruck stehen, ein selbsttätiges Lösen des Schließkörpers aus seiner mittels Selbstverstemmung bzw. Clinchen hergestellten Befestigung nicht auszuschließen, wodurch nicht nur mit Undichtigkeit, sondern mit einem völligen Funktionsausfall des Schließkörpers und somit der Anlage, beispielsweise einer hydraulischen Bremsanlage für Kraftfahrzeuge, zu rechnen ist.

Daher besteht die Aufgabe der vorliegenden Erfindung darin, die Nachteile des Standes der Technik zu vermeiden und eine Verschlußvorrichtung zu schaffen, die bei einfachem und kostengünstigem Aufbau eine besonders sichere Befestigung und Abdichtung des Schließkörpers im Gehäuse vorsieht.

Die erfindungsgemäße Aufgabe wird bei einer Verschlußvorrichtung der eingangs genannten Art dadurch gelöst, daß der Schließkörper an seinem Außenumfang zumindest eine weitere Ausnehmung zur Aufnahme eines Überschußvolumens von Gehäusematerial aufweist, das beim Eindrücken des Schließkörpers entsteht.

Falls die Oberfläche der Gehäuses vor dem Clinchvorgang gehärtet bzw. auf andere beliebige Art und Weise behandelt worden ist, können beim Einclinchen Flitter, d.h. flache Späne der Gehäuseoberfläche abplatzen. Diese werden erfindungsgemäß ebenfalls in der zweiten Ausnehmung aufgenommen, so daß das Druckmittel vor Verunreinigungen geschützt ist, die beim Einclinchen entstehen können.

Ein weiterer Vorteil der vorliegenden Erfindung besteht darin, daß keine zusätzliche Bauraumvergrößerung des Gehäuses erforderlich ist, um eine gegenüber dem Stand der Technik verbesserte Berstdruckfestigkeit zu erzielen.

Noch ein weiterer Vorteil der vorliegenden Erfindung besteht darin, daß die zusätzliche Ausnehmung an allen geclinchten bzw. verstemmten hydraulischen Verschlüssen ausgebildet werden kann.

Vorteilhafterweise sind die Ausnehmungen als ringförmige Nuten ausgebildet. Durch die sich dadurch ergebende axialsymetrische Anordnung des Schließkörpers im Gehäuse kann eine besonders gute Befestigung hinsichtlich Kippkräften erreicht werden, welche ein Ausknöpfen des Schließkörpers verursachen können.

In einer weiteren bevorzugten Ausführungsform der vorliegenden Erfindung sind die Ausnehmungen in axialer Richtung zueinander versetzt angeordnet. Die erfindungsgemäße weitere Ausnehmung ist dabei axial nach innen versetzt ausgebildet, um die beim Einclinchvorgang enstehende, sich nach innen ausbreitende "Bugwelle", die aus Überschußvolumen von Gehäusematerial gebildet ist, aufzunehmen. Damit wird eine erhöhte Berstdruckfestigkeit erzielt.

Bevorzugt besitzt die weitere Ausnehmung ein größeres Volumen als die erste Ausnehmung. Damit kann möglichst viel Überschußvolumen des Gehäusematerials aus der "Bugwelle" aufgenommen werden, wodurch das Abfließen des Überschußmaterials optimiert wird.

Zur optimalen Aufnahme von Gehäusematerial, welches durch den Clinchvorgang nach innen gebracht wird, besitzt die weitere Ausnehmung an der äußeren Seite eine abgeflachte Seitenwand. Dies erleichtert ebenfalls die Materialaufnahme des abfließenden Gehäusematerials.

Gemäß einer besonders bauraumsparenden Ausführungsform der Erfindung besitzt der Schließkörper im wesentlichen die Form eines abgeflachten Zylinders.

Ferner weist der Schließkörper in einer bevorzugten Ausführungsform auf der dem Druckmittel zugewandten Seite eine im wesentlichen zylindrische Ausnehmung auf, welche im eingebauten Zustand und im Betrieb eine erhöhte Berstdruckfestigkeit schafft.

Weitere Ziele, Merkmale, Vorteile und Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der Erfindung, und zwar unabhängig von ihrer Zusammenfassung in den Ansprüchen oder deren Rückbeziehung. In den Zeichnungen zeigen:
- Fig. 1: eine schematische Teilschnittansicht der erfindungsgemäßen Verschlußvorrichtung, und zwar in einem, in ein Gehäuse eingebautem Zustand;
- Fig. 2: eine Ansicht entsprechend Fig. 1, wobei allerdings lediglich der erfindungsgemäß ausgebildete Schließkörper gezeigt ist; und
- Fig. 3: eine vergrößerte Ansicht des in Fig. 2 durch einen Kreis angezeigten Ausschnittes.

In den Zeichnungen bezeichnen dieselben Bezugszeichen dieselben bzw. entsprechende Elemente. Überall in dieser Anmeldung bezeichnen die Ausdrücke "innen", "außen" und dergleichen die relative Anordnung von Merkmalen bezüglich der Außenseite eines Gehäuses. Diese Art der Bezeichnung ist nicht beschränkend aufzufassen, sondern dient lediglich der besseren Lesbarkeit dieser Beschreibung.

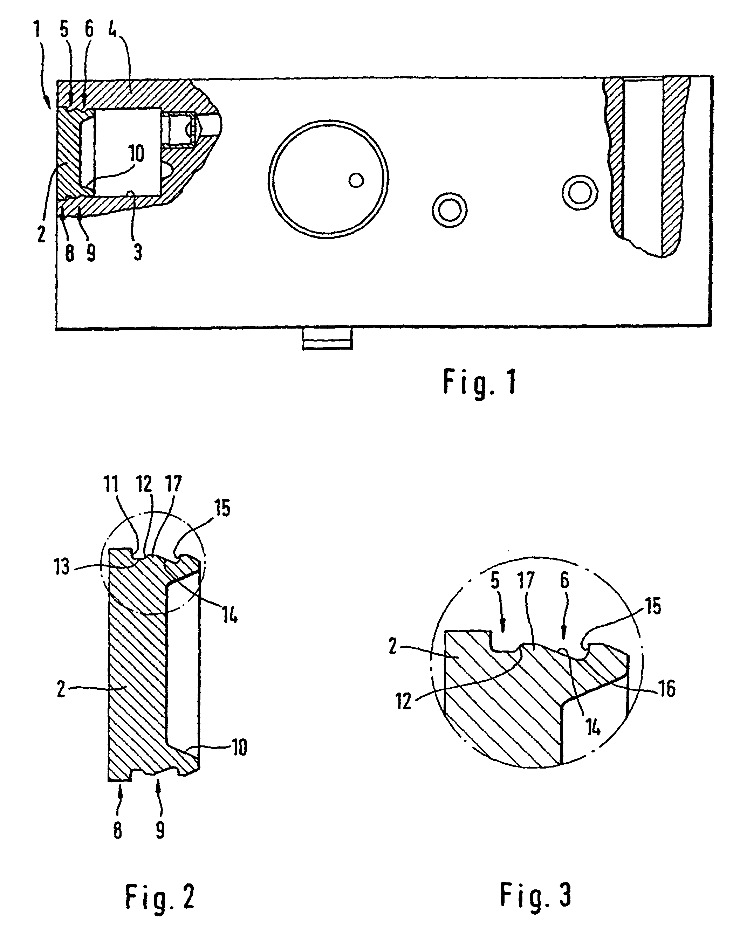

Die Fig. 1 zeigt schematisch eine erfindungsgemäß vorgeschlagene Verschlußvorrichtung 1, die einen im Profilschnitt im wesentlichen topfförmigen Schließkörper 2 aufweist, der mittels einer Verstemmungs- oder Clinchverbindung in einer Stufenbohrung 3 eines Gehäuses 4 angebracht ist, um die Stufenbohrung 3 druckdicht zu verschließen. An der Clinchstelle zwischen der Stufenbohrung 3 und dem Schließkörper 2 ist das in Ausnehmungen oder Einformungen 5, 6 plastisch verdrängte Material des Gehäuses 4 dargestellt. Erfindungsgemäß ist dabei zusätzlich zur Ausnehmung 5 zumindest eine weitere Ausnehmung 6 vorgesehen. Der Schließkörper 2 weist beiderseits der äußeren Ausnehmung 5 an den Durchmesser der Stufenbohrung 3 angepaßte Abschnitte auf, die als äußerer Abschnitt 8 und innerer Abschnitt 9 bezeichnet werden. Der innere Abschnitt 9 mit geringerem Durchmesser besitzt im wesentlichen eine Verschlußfunktion, während der äußere Abschnitt 8 mit größerem Durchmesser vornehmlich eine Sicherungsfunktion zur Befestigung des Schließkörpers 2 in der Stufenbohrung 3 besitzt. Der innere Abschnitt 9 des Schließkörpers 2 ist ausgehöhlt ausgebildet und weist eine Ausnehmung 10 auf, die im Betrieb mit Strömungsmittel gefüllt ist. Die Ausnehmungen 5, 6, welche vorzugsweise als axial umlaufende Ringnuten ausgebildet sind, sind insbesondere auf dem inneren Abschnitt 9 des Schließkörpers 2 zueinander in axialer Richtung versetzt angeordnet. In der Schnittansicht der Fig. 1 erkennt man, daß die Ausnehmungen 5, 6 im wesentlichen die gleiche Tiefe besitzen. Im Hinblick auf das in den Zeichnungen dargestellte Schnittprofil unterscheiden sich die Ausnehmungen 5, 6 jedoch voneinander.

Wie insbesondere in Fig. 2 dargestellt ist, weist die äußere Ausnehmung 5 eine äußere, im wesentlichen senkrechte Seitenwand 11, eine innere, um einen Winkel von in etwa 45 Grad nach innen zur Vertikalen geneigte Seitenwand 12 und einen Bodenbereich 13 auf. Der Durchmesser der Ausnehmung 5 verringert sich so in radialer Richtung an der Stelle der Seitenwand 12 (Fig. 3). Die innere Ausnehmung 6 weist eine äußere Seitenwand 14, eine innere Seitenwand 15 und einen Bodenbereich 16 auf. Die äußere Seitenwand 14 der Ausnehmung 6 ist der inneren Seitenwand 12 der Ausnehmung 5 benachbart, und wird von dieser durch einen Steg 17 getrennt, welcher etwa bis zum Außendurchmesser des inneren Abschnitts 9 des Schließkörpers 2 vorsteht. Die äußere Seitenwand 14 der Ausnehmung 6 ist um einen Winkel von größer als 45 Grad nach außen zur Vertikalen geneigt und die innere Seitenwand 15 ist im wesentlichen vertikal ausgebildet. Die Seitenwand 14 besitzt in axialer Richtung eine Erstrekkung, die etwa dreimal so groß wie diejenige der Seitenwand 11 ist. Dadurch ist das in der Ausnehmung 6 beim Clinchvorgang aufnehmbare Volumen an Gehäusematerial größer als das der Ausnehmung 5. Die Form der Ausnehmung 6 ist dahingehend vorteilhaft, Gehäusematerial, das sich nach Art einer Bugwelle durch den Clinchvorgang nach innen bewegt, optimal aufzunehmen und so die Dichtwirkung und Druckfestigkeit der erfindungsgemäßen Verschlußvorrichtung 1 zu verbessern.

### Bezugszeichenliste

- 1: Verschlußvorrichtung
- 2: Schließkörper
- 3: Stufenbohrung
- 4: Gehäuse
- 5: äußere Ausnehmung
- 6: innere Ausnehmung
- 8: äußerer Abschnitt
- 9: innerer Abschnitt
- 10: Ausnehmung
- 11: äußere Seitenwand
- 12: innere Seitenwand
- 13: Bodenbereich
- 14: äußere Seitenwand
- 15: innere Seitenwand
- 16: Bodenbereich
- 17: Steg

## Patentansprüche

1. Verschlußvorrichtung (1) zum Verschließen von Druckmittel führenden Kanälen in einem Gehäuse (4) durch einen, in einem Kanal durch eine Clinchverbindung befestigten Schließkörper (2), wobei der Schließkörper (2) an seinem Außenumfang eine erste Ausnehmung (5) für die Clinchverbindung aufweist, **dadurch gekennzeichnet, daß** der Schließkörper (2) an seinem Außenumfang zumindest eine weitere Ausnehmung (6) zur Aufnahme eines Oberschußvolumens von Gehäusematerial aufweist, das beim Eindrücken des Schließkörpers (2) entsteht.

2. Verschlußvorrichtung (1) nach Anspruch 1, **dadurch gekennzeichnet, daß** die Ausnehmungen (5, 6) ringförmige Nuten sind.

3. Verschlußvorrichtung (1) nach Anspruch 1 oder 2, **dadurch gekennzeichnet, daß** die Ausnehmungen (5, 6) in axialer Richtung versetzt sind.

4. Verschlußvorrichtung (1) nach einem der vorhergehenden Ansprüche, **dadurch gekennzeichnet, daß** die weitere Ausnehmung (6) ein größeres Volumen als die erste Ausnehmung (5) aufweist.

5. Verschlußvorrichtung (1) nach einem der vorhergehenden Ansprüche, **dadurch gekennzeichnet, daß** die weitere Ausnehmung (6) an ihrer zur ersten Ausnehmung (5) hin gerichteten Seite eine abgeflachte Seitenwand (14) aufweist.

6. Verschlußvorrichtung (1) nach einem der vorhergehenden Ansprüche, **dadurch gekennzeichnet, daß** der Schließkörper (2) im wesentlichen die Form eines abgeflachten Zylinders aufweist.

7. Verschlußvorrichtung (1) nach einem der vorhergehenden Ansprüche, **dadurch gekennzeichnet, daß** der Schließkörper (2) auf der dem Druckmittel zugewandten Seite eine im wesentlichen zylindrische Ausnehmung (10) aufweist.

## Claims

1. Closure device (1) for closing ducts, which are arranged in a housing (4) and in which pressure fluid is conveyed, by means of a closure member (2) that is attached in a duct by a clinch-type engagement, the said closure member (2) including a first recess (5) at its outside periphery for said clinch-type engagement,
**characterized in that** the closure member (2) has at least one further recess (6) at its outside periphery for accommodating an excess volume of housing material which develops when the closure member (2) is pressed in.

2. Closure device (1) as claimed in claim 1,
**characterized in that** the recesses (5, 6) are annular grooves.

3. Closure device (1) as claimed in claim 1 or claim 2,
**characterized in that** the recesses (5, 6) are offset in an axial direction.

4. Closure device (1) as claimed in any one of the preceding claims,
**characterized in that** the second recess (6) has a larger volume than the first recess (5).

5. Closure device (1) as claimed in any one of the preceding claims,
**characterized in that** the second recess (6) has a flattened side wall (14) at its side directed to the first recess (5).

6. Closure device (1) as claimed in any one of the preceding claims,
**characterized in that** the closure member (2) generally has the shape of a flattened cylinder.

7. Closure device (1) as claimed in any one of the preceding claims,
**characterized in that** the closure member (2) includes a generally cylindrical recess (10) on the side facing the pressure fluid.

## Revendications

1. Dispositif d'obturation (1) pour fermer des canaux transportant des fluides sous pression, dans un boîtier (4), au moyen d'un corps d'obturation (2) fixé dans un canal par une liaison clinch, le corps d'obturation (2) présentant, sur son pourtour extérieur, un premier évidement (5) pour la liaison clinch, **caractérisé en ce que** le corps d'obturation (2) présente, sur son pourtour extérieur, un autre évidement (6) destiné à recevoir un volume excédentaire de matière du boîtier, qui se forme lorsque l'on enfonce le corps d'obturation(2).

2. Dispositif d'obturation (1) selon la revendication 1, **caractérisé en ce que** les évidements (5, 6) sont des rainures de forme annulaire.

3. Dispositif d'obturation (1) selon la revendication 1 ou 2, **caractérisé en ce que** les évidements (5, 6) sont décalés dans la direction axiale.

4. Dispositif d'obturation (1) selon l'une des revendications précédentes, **caractérisé en ce que** l'autre évidement (6) présente un plus grand volume que le premier évidement (5).

5. Dispositif d'obturation (1) selon l'une des revendications précédentes, **caractérisé en ce que** l'autre évidement (6) présente, sur son côté dirigé vers le premier évidement (5), une paroi latérale (14) aplatie.

6. Dispositif d'obturation (1) selon l'une des revendications précédentes, **caractérisé en ce que** le corps d'obturation (2) présente sensiblement la forme d'un cylindre aplati.

7. Dispositif d'obturation (1) selon l'une des revendications précédentes, **caractérisé en ce que** le corps d'obturation (2) présente, sur le côté tourné vers le fluide sous pression, un évidement (10) sensiblement cylindrique.
